# EUROPEAN PATENT APPLICATION

(11) **EP 3 000 960 A1**
(43) Date of publication of application: **30.03.2016**
(21) Application number: 14186004.9
(22) Date of filing: 23.09.2014
(51) Int. Cl.: E21B 33/038, H02G 1/10

(54) **Actuator apparatus for forming underwater electrical connection**

(71) Applicant: Soil Machine Dynamics Limited, Tyne and Wear NE28 6UZ (GB)
(72) Inventor: The designation of the inventor has not yet been filed
(74) Representative: Vinsome, Rex Martin

(57) **Abstract**

An actuator apparatus (48) for forming an electrical connection between a cable termination head (4) and a receiver frame (6) of a turbine generator apparatus is disclosed. The actuator apparatus comprises an actuator member (50) adapted to be mounted to the cable termination head having first electrical terminals (44) and to be actuated by pressure applied thereto, and having a first condition, in which the first electrical terminals are in electrical contact with second electrical terminals (46) on the receiver frame, and a second condition, in which the first electrical terminals are not in electrical contact with the second electrical terminals. The actuator apparatus is adapted to be changed between the first and second conditions by means of repeated application of pressure to the actuator member.

## Description

The present invention relates to an actuator apparatus for forming an electrical connection between a first underwater object and a second underwater object, and relates particularly, but not exclusively, to an actuator apparatus for forming an electrical connection between a cable termination head and a receiver frame of a tidal generator apparatus.

During installation of a tidal turbine generator, a cable termination head, to which a cable for transferring power from the turbine generator to shore is connected, needs to form an electrical connection with an undersea receiver frame of the turbine generator. Such underwater electrical connections are made by means of apparatus known as stab connections. Such apparatus are complicated and expensive to produce.

Preferred embodiments of the present invention seek to overcome one or more of the above disadvantages of the prior art.

According to the present invention, there is provided an actuator apparatus for forming an electrical connection between a first underwater object and a second underwater object, the actuator apparatus comprising:-
at least one actuator member adapted to be mounted to a first underwater object having first electrical terminals and to be actuated by pressure applied thereto, and having a first condition, in which said first electrical terminals are in electrical contact with second electrical terminals on a second underwater object, and a second condition, in which said first electrical terminals are not in electrical contact with said second electrical terminals, wherein the actuator apparatus is adapted to be changed between said first and second conditions by means of repeated application of pressure to at least one said actuator member.

By providing at least one actuator member adapted to be mounted to a first underwater object having first electrical terminals and to be actuated by pressure applied thereto, and having a first condition, in which said first electrical terminals are in electrical contact with second electrical terminals on a second underwater object, and a second condition, in which said first electrical terminals are not in electrical contact with said second electrical terminals, wherein the actuator apparatus is adapted to be changed between said first and second conditions by means of repeated application of pressure to at least one said actuator member, this provides the advantage of enabling the active pressure applying components, which tend to be expensive components of an assembly including the apparatus, to be mounted to a positioning apparatus which is recoverable to the surface, thereby reducing the cost of the actuator apparatus.

At least one said actuator member may be accessible from a surface of the actuator apparatus.

The apparatus may further comprise at least one respective body member moveably mounted relative to at least one said actuator member such that application of pressure to said actuator member causes movement of at least one respective said body member relative to said actuator member.

The apparatus may further comprise cam means comprising at least one groove, provided on one of a respective actuator member and a body member, and at least one protrusion, provided on the other of said actuator member and said body member and adapted to engage a said groove, wherein application of pressure to said actuator member causes movement of said body member relative to said actuator member as a result of engagement of at least one said protrusion with a corresponding said groove.

The apparatus may further comprise display means for indicating a condition of said actuator apparatus.

The display means may comprise at least one indicator visible at a surface of said actuator apparatus and connected to at least one said actuator member.

This provides the advantage of reducing the cost of production of the apparatus.

The apparatus may further comprise biasing means for urging at least one said body member towards the corresponding said actuator member.

This provides the advantage of assisting in releasing the first underwater object from the second underwater object.

A preferred embodiment of the invention will now be described, by way of example only and not in any limitative sense, with reference to the accompanying drawings in which:-
Figure 1 is a schematic view of a surface vessel, positioning apparatus cable, termination head and submarine cable for a tidal turbine generator apparatus in a first mode of operation of the positioning apparatus;
Figure 2 is a view corresponding to Figure 1 with the positioning apparatus in the second mode thereof;
Figure 3 is a side view of part of the positioning apparatus of Figure 1 in a second mode thereof;
Figure 4 is a view corresponding to Figure 3 with the positioning apparatus in a first mode thereof;
Figure 5 is a cross sectional view along the line A-A in Figure 3;
Figures 6 to 9 show a process for locking a cable termination head to a receiver frame using the positioning apparatus of Figure 1 and a locking apparatus;
Figure 10 is a side cross sectional view of the positioning apparatus, cable termination head and receiver frame of Figure 1 showing an actuator apparatus embodying the present invention, prior to forming an electrical connection between the cable termination head and the receiver frame;
Figure 11 is a view corresponding to Figure 10 after formation of the electrical connection; and
Figures 12 to 16 show a detailed view of formation of the electrical connection between the cable termination head and receiver frame by means of the actuator apparatus of Figures 10 and 11.

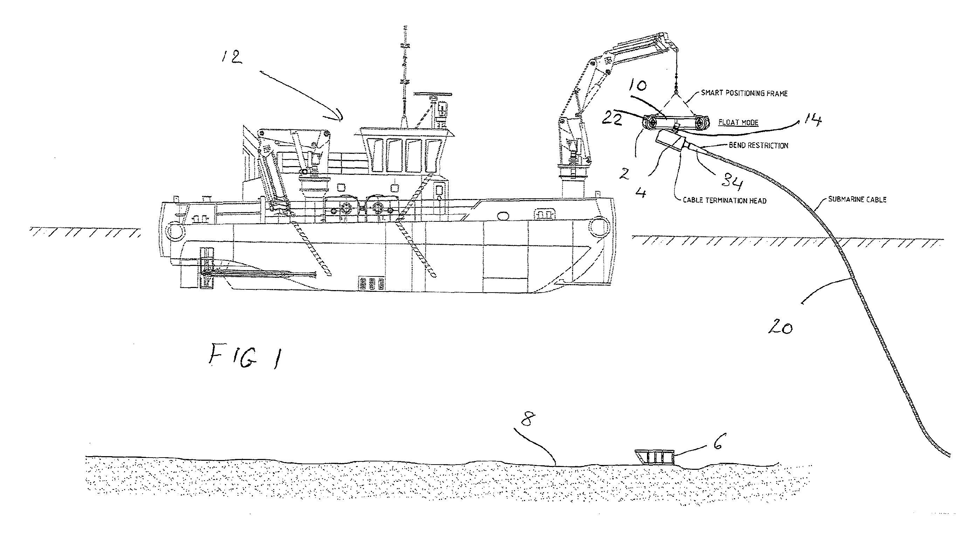

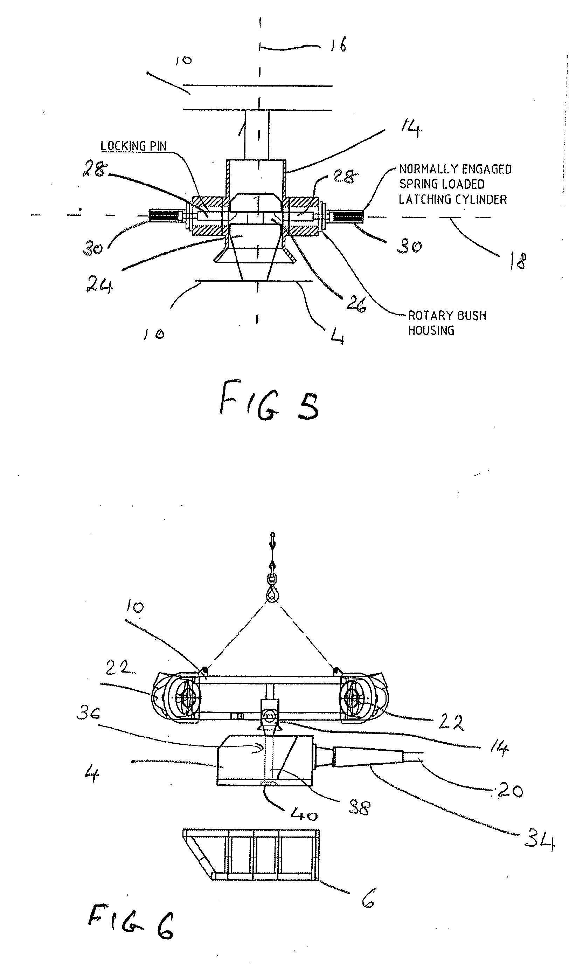

Referring to Figure 1, a positioning apparatus 2 for locating a first underwater object in the form of a cable termination head 4 in a second underwater object in the form of a receiver frame 6 of a tidal generator apparatus (not shown) located on the seabed 8 has a body 10 which can be lowered to the seabed 8 by a surface vessel 12 and an engaging member in the form of a support 14 for the cable termination head 4 which, in a first mode of the positioning apparatus 2 as shown in Figure 1, is connected to the body 10 by a gimbal mechanism so that the support 14 can rotate about mutually perpendicular axes 16, 18 (Figure 5) relative to the body 10. A cable 20 for transferring power from the tidal generator apparatus to the shore is connected to the cable termination head 4. The body 10 of the positioning apparatus 2 is provided with thrusters 22 for controlling the position of the apparatus 2.

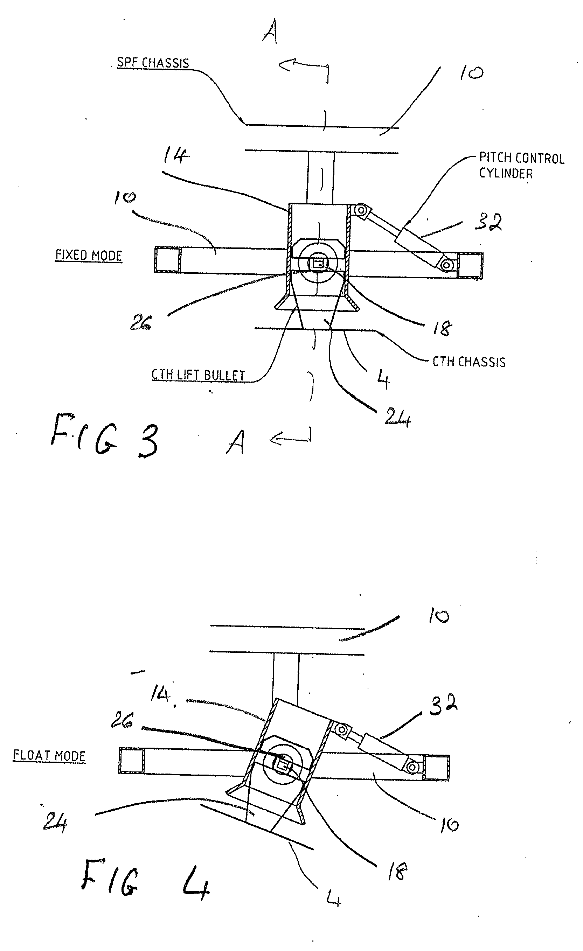

As shown in greater detail in Figures 3 to 5, the cable termination head 4 is provided with a protrusion 24 on its upper surface having a recess 26 for receiving locking pins 28 of a latching mechanism provided on the support 14 so that the support 14 can be lowered into latching engagement with the protrusion 24 on the cable termination head 4 while allowing rotation of the support 14 about axis 16 relative to the cable termination head 4. The locking pins 28 are spring loaded towards the latching position, and can be released by remote actuation of latching cylinders 30 to withdraw the locking pins 28 to release the support 14 from the protrusion 24. Pivoting of the support 14 about axis 18 relative to the body 10 of the positioning apparatus 2 is controlled by a pitch control cylinder 32.

The operation of the positioning apparatus 2 shown in Figures 1 to 5 will now be described.

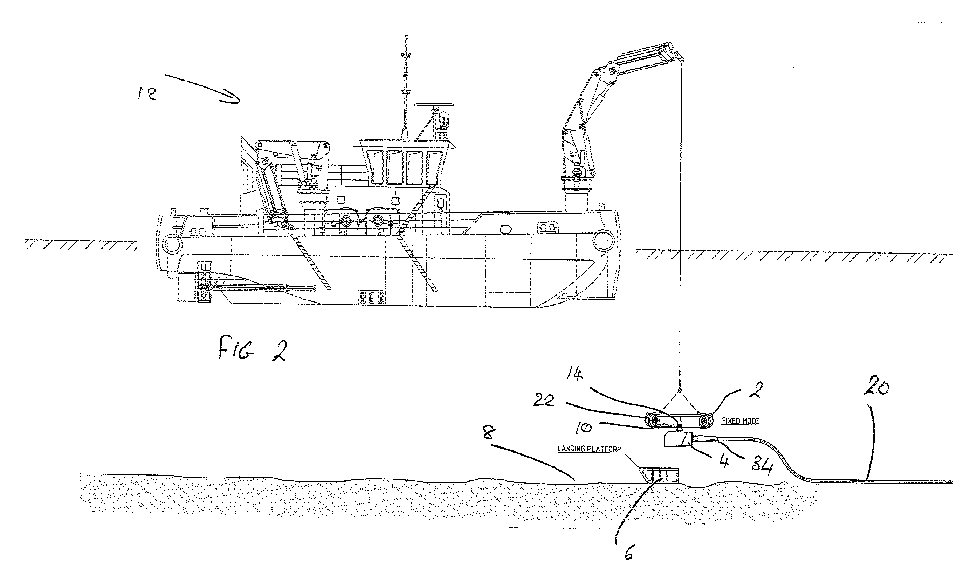

In an initial condition of the positioning apparatus 2, the positioning apparatus 2 is in its first mode in which the cable termination head 4 can pivot about the first 16 and second 18 axes relative to the body 10 of the positioning apparatus 2. As a result, the cable termination head 4 can orient itself under the weight of the cable 20 such that bending forces in the cable 20 are minimised. This in turn enables less robust bend restrictors such as a polyurethane bend restrictor 34 to be used, as a result of which the cable termination head 4 and bend restrictor 34 can be mounted to the cable 20 in a factory and mounted to a reel (not shown), making installation of the cable 20 more reliable. As the cable termination head 4 approaches the receiver frame 6 on the seabed 8, as shown in Figure 2, the orientation of the cable termination head 4 relative to the body 10 of the positioning apparatus 2 is fixed by means of the pitch control cylinder 32, as a result of which more accurate location of the cable termination head 4 in the receiver frame 6 can be carried out.

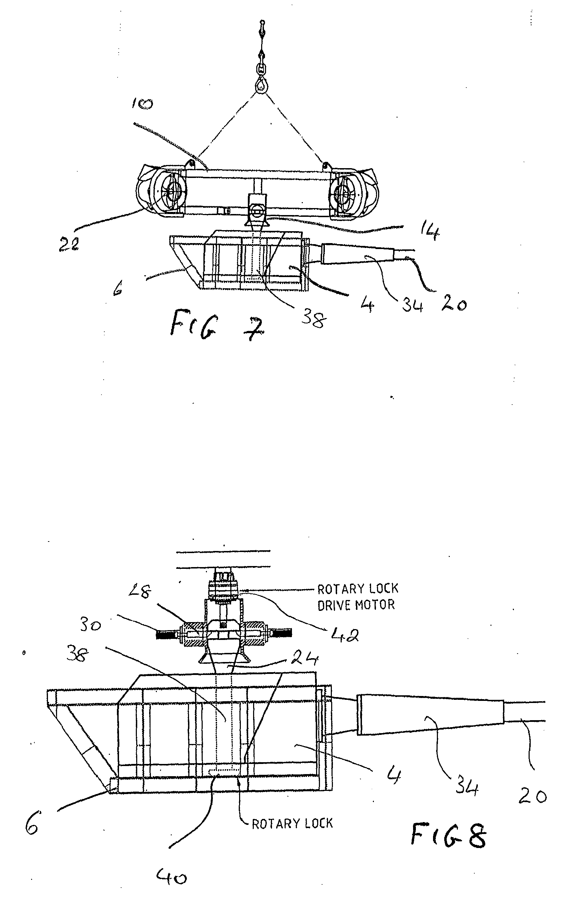

Referring to Figures 6 to 9, a locking apparatus 36 has a locking member 38 which extends from the protrusion 24 in the upper surface of the cable termination head 4 to a lower part of the cable termination head 4 where a distal end 40 thereof can be rotated by means of a lock drive motor 42 (Figure 8) to lock the cable termination head 4 to the receiver frame 6. The locking member 38 is arranged such that the latching cylinders 30 of the latching mechanism on the positioning apparatus 2 cannot be released from the protrusion 24 unless the locking member 38 is in its locked condition, i.e. locking the cable termination head 4 to the receiver frame 6. This can be achieved either mechanically, or by means of software.

The operation of the locking apparatus 36 shown in Figures 6 to 9 will now be described.

The positioning apparatus 2 brings the cable termination head 4 mounted thereto, in the second mode of operation of the manipulator apparatus, into engagement with the receiver frame 6. When the cable termination head 4 is correctly located in the receiver frame 6, the lock drive motor 42 rotates the locking member 38 into its locking condition so that the distal end 40 of the locking member 38 locks the cable termination head 4 in engagement with the receiver frame 6. With the locking member 38 in this position, the latching cylinders 30 can be remotely operated to retract the locking pins 28 to release the support 14 from the protrusion 24 on the cable termination head 4 and enable the positioning apparatus 2 to be retrieved to the surface vessel 12.

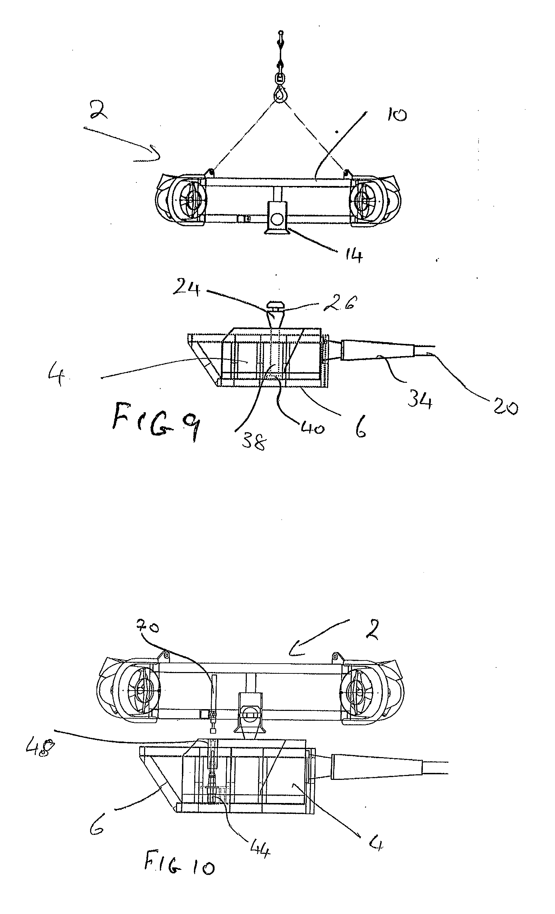

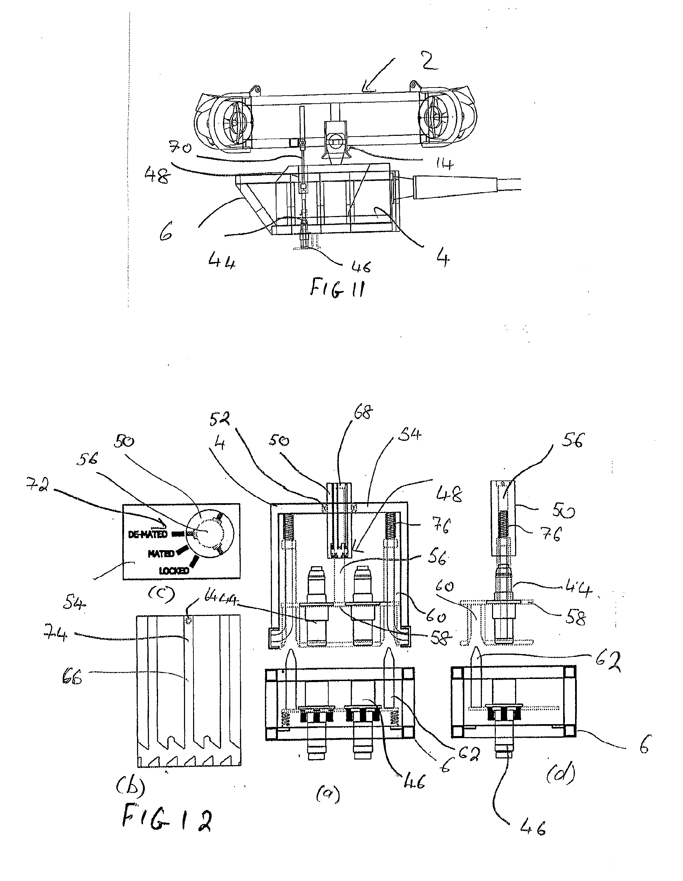

Referring to Figures 10 and 11, when the cable termination head 4 is locked to the receiver frame 8, electrical connection between first electrical terminals 44 on the cable termination head 4 and second electrical terminals 46 on the receiver frame 6 is established by means of a stab connection actuated by an actuator apparatus 48. As shown in greater detail in Figures 12 to 16, the actuator apparatus 48 is mounted to the cable termination head 4 and has an actuator member 50 rotatably mounted via a bearing 52 in a housing 54 of the cable termination head 4 and a body member 56 slidably mounted in the actuator member 50 and supporting a stab plate 58 which in turn supports first electrical terminals 44 on the cable termination head 4 for mating with second electrical terminals 46 on the receiver frame 6. The cable termination head 4 is provided with a pair of guide rails 60 for receiving guide pins 62 on the receiver frame 6 to ensure correct alignment of the cable termination head 4 and receiver frame 6.

The body member 56 extending from the stab plate 58 and slidably mounted to actuator member 50 is provided with three pins 64 arranged equiangularly around its external circumference, the pins 64 engaging corresponding grooves 66 on the internal surface of the actuator member 50 as shown in Figure 12(c). The body member 56 is accessible at an upper surface of the cable termination head 4, i.e. at open upper end 68 of the actuator member 50, so that pressure can be applied to the body member 56 by means of a piston 70 located on the positioning apparatus 2, as shown in Figures 10 and 11. Referring again to Figures 12 to 16, a visual indicator 72 is provided at the upper end 68 of the body member 56 and actuator member 50 as shown in Figure 12(d) to indicate the condition of the actuator apparatus 48.

The operation of the actuator apparatus 48 will now be described.

As the cable termination head 4 is located in the receiver frame 6 and locked thereto as shown in Figure 8, the first 44 and second 46 electrical terminals are in the state shown in Figures 12(a) and 12 (b), the pins 64 on the body member 56 are located in upper parts 74 of the respective grooves 66, and the visual indicator 72 indicates that the actuator apparatus 48 is in the de-mated condition.

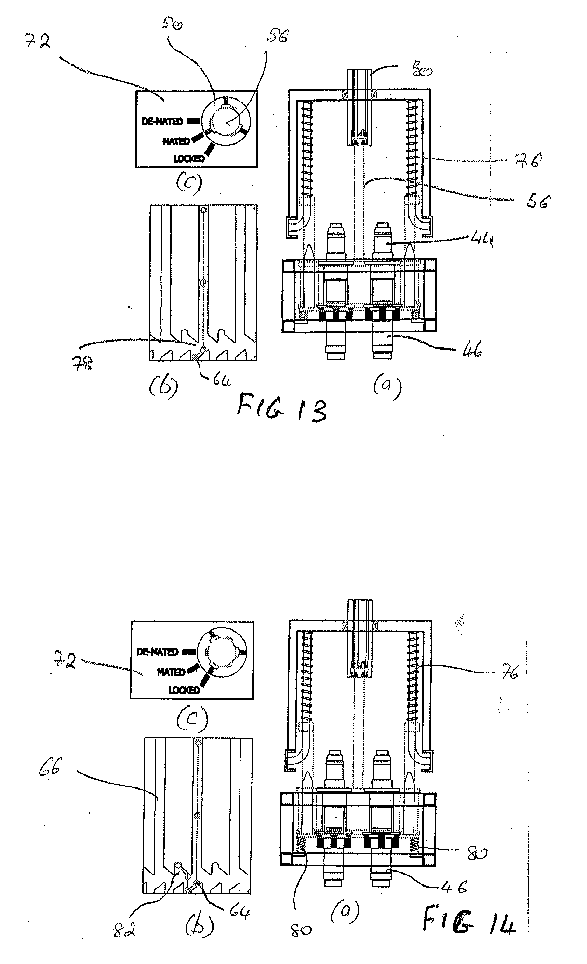

In order establish an electrical connection between the first 44 and second 46 electrical terminals, the piston 70 on the positioning apparatus 2 is extended as shown in Figure 11, as a result of which the body member 56 is urged downwards relative to the actuator member 50 against the action of springs 76 to bring the first 44 and second 46 electrical terminals into engagement with each other as shown in Figure 13(a). Movement of the pins 64 to lower parts 78 of the grooves 66 causes rotation of the actuator member 50 relative to the body member 56 such that the visual indicator 72 rotates to indicate that the actuator apparatus 48 is in the mated condition as shown in Figure 13(c). The piston 70 is then retracted, as a result of which the pins 64 are moved by the action of the springs 76 and compression springs 80 into recesses 82 in the grooves 66 in the actuator member 50 to retain the first 44 and second 46 electrical terminals in their locked condition. At the same time, further movement of the pins 64 along the grooves 66 to the recesses 82 causes further rotation of the actuator member 50 in the cable termination head 4, so that the visual indicator 72 then indicates that the apparatus is in the locked condition as shown in Figure 14(c).

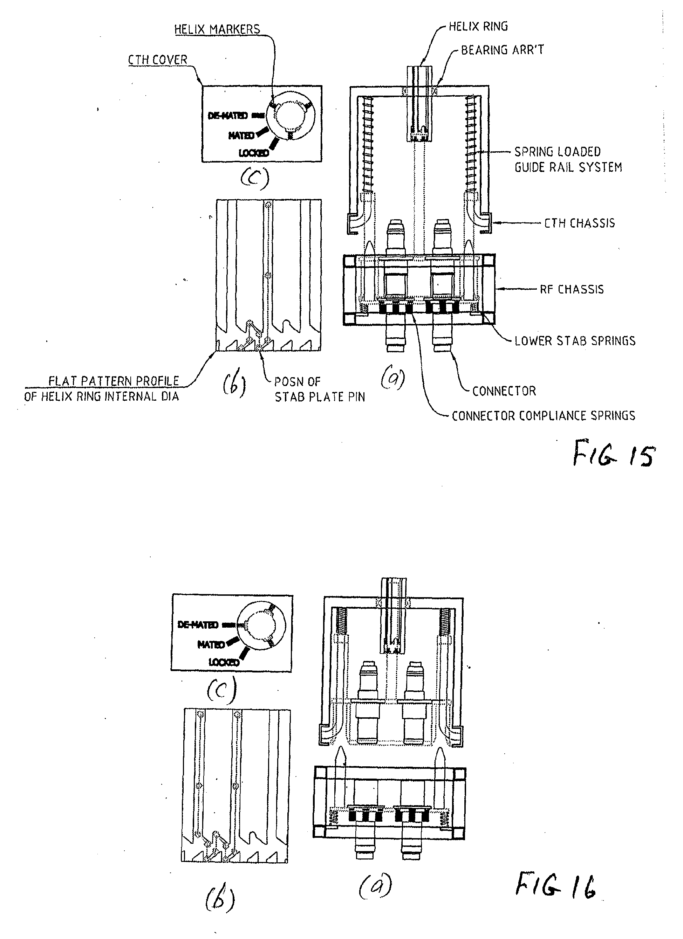

In order to separate the first 44 and second 46 electrical terminals from each other, the piston 70 is extended again to urge the body member 56 downwards relative to the actuator member 50, so that the pins 64 can now access the vertical portions of the corresponding grooves 66 in the actuator member 50. Further rotation of the actuator member 50 in the cable termination head 4 indicates the condition shown in Figure 15(c). On subsequent retraction of the piston 70, the springs 76, 80 can now urge the body member 56 (together with the first electrical terminals 44) upwards so that the pins 64 are located in the upper portions 74 of the grooves 66 and the visual indicator 72 rotates further in the cable termination head 4 to indicate that the actuator apparatus 48 is again in the de-mated condition as shown in Figure 16(c) thereby restoring the condition shown in Figure 12(a) to 12(c).

It will be appreciated by persons skilled in the art that the above embodiment has been described by way of example only, and not in any limitative sense, and that various alterations and modifications are possible without departure from the scope of the invention as defined by the appended claims.

## Claims

1. An actuator apparatus for forming an electrical connection between a first underwater object and a second underwater object, the actuator apparatus comprising:-
at least one actuator member adapted to be mounted to a first underwater object having first electrical terminals and to be actuated by pressure applied thereto, and having a first condition, in which said first electrical terminals are in electrical contact with second electrical terminals on a second underwater object, and a second condition, in which said first electrical terminals are not in electrical contact with said second electrical terminals, wherein the actuator apparatus is adapted to be changed between said first and second conditions by means of repeated application of pressure to at least one said actuator member.

2. An apparatus according to claim 1, wherein at least one said actuator member is accessible from a surface of the actuator apparatus.

3. An apparatus according to claim 1 or 2, further comprising at least one respective body member
moveably mounted relative to at least one said actuator member such that application of pressure to said actuator member causes movement of at least one respective said body member relative to said actuator member.

4. An apparatus according to claim 3, further comprising cam means comprising at least one
groove, provided on one of a respective actuator member and a body member, and at least one protrusion, provided on the other of said actuator member and said body member and adapted to engage a said groove, wherein application of pressure to said actuator member causes movement of said body member relative to said actuator member as a result of engagement of at least one said protrusion with a corresponding said groove.

5. An apparatus according to claim 3 or 4, further comprising biasing means for urging at least one said body member towards the corresponding said actuator member.

6. An apparatus according to any one of the preceding claims, further comprising display means for indicating a condition of said actuator apparatus.

7. An apparatus according to claim 6, wherein the display means comprises at least one indicator visible at a surface of said actuator apparatus and connected to at least one said actuator member.
